# EUROPEAN PATENT SPECIFICATION

(11) **EP 4 600 180 B1**
(45) Date of publication and mention of the grant of the patent: **08.04.2026**
(21) Application number: 25156938.0
(22) Date of filing: 10.02.2025
(51) Int. Cl.: B65G 1/04

(54) **AUTOMATIC SYSTEM FOR STORING AND HANDLING GROUPS OF ARTICLES TO BE PROCESSED**
AUTOMATISCHES SYSTEM ZUM SPEICHERN UND HANDHABEN VON ZU VERARBEITENDEN ARTIKELGRUPPEN
SYSTÈME AUTOMATIQUE POUR STOCKER ET MANIPULER DES GROUPES D'ARTICLES À TRAITER

(30) Priority: 12.02.2024 IT 202400002863
(43) Date of publication of application: 13.08.2025
(73) Proprietor: ADIGE-SYS S.P.A., 38056 Levico Terme (TN) (IT)
(72) Inventor: SARTORELLO, Devis, 31027 Lovadina di Spresiano TV (IT); ZANUSO, Claudio, 31050 Fanzolo di Vedelago TV (IT)
(74) Representative: Concone, Emanuele

(56) References cited:
- CN-A- 109 516 053
- FR-B1- 2 842 754
- IT-A1- 202100 020 966
- US-A- 5 645 392

## Description

### Technical field of the invention

The present invention relates to a system for handling articles arranged in groups placed on trays stored in a tower frame, so as to bring the articles one at a time to a loading station for transfer to a machine for their processing (e.g., laser cutting machine, punching machine, etc.) and to bring the processed articles back to an unloading station on a tray to be repositioned on the tower when the processing of the group of articles is completed. In the following, specific reference will be made to the processing of sheet material arranged in stacks, but what is being said can similarly be applied to other articles such as bars, beams, pipes and the like arranged side-by-side and/or on top of each other as long as they are carried by a flat support.

### State of the art

In conventional systems, such as those according to the preamble of claim 1 as disclosed in FR 2 842 754 B1, the handling of articles is done by means of an elevator that moves vertically between the aforementioned loading and unloading stations and the storage stations on the tower. The elevator is equipped above with a tray handling device acting on tray side supports arranged in the direction of horizontal movement of the tray, the support surface of which comprises a plurality of spaced bars perpendicular to said side supports. The elevator is also equipped below with an unloader formed by a bed of parallel needles arranged in the direction of horizontal displacement of the tray, said unloader being used to pick up the processed plate and bring it to the unloading station.

The introduction into the system of a new stack of sheets to be processed and the removal from the system of a stack of processed sheets takes place by means of a forklift equipped with forks, which rest or pick up the stack on/from the tray carried by the elevator to a suitable height at an operational loading/unloading level. To avoid harmful contact between the forks of the forklift and the tray, the stack of sheets must be kept raised above the tray during such operations by a plurality of vertical tips that protrude above the tray support surface.

These tips are mounted on the ground at the elevator ground footprint area, either in a fixed vertical position (as in CN 109516053) or liftable at the time of need (as in IT 202100020966), and must thread between the unloader needles and the tray bars in order to protrude above. However, this prior art solution has some drawbacks both in terms of cost and operation.

In the first place, the tips must be large and strong enough to hold the load of a stack of sheets, so the clearance with respect to the needles and bars spacing is quite limited. On the other hand, increasing the spacing and/or removing some of the needles in the tips passage area can create problems when unloading processed sheets, as some small pieces of cut sheet may fall into the gap where the needles are missing. In any case, therefore, there is a risk of the tips touching the needles and/or bars causing breakage or deformation of the tips themselves and/or the unloader needles, resulting in repair costs in terms of materials, labor and downtime.

Secondly, the presence of the tips on the ground prevents approaching with the forklift to load a sheet directly into the loading station, an operation that may be necessary in the event of elevator failure or to load a sheet of greater weight/thickness than is automatically manageable by the system.

### Summary of the invention

It is therefore the purpose of the present invention to provide an automatic system that overcomes these drawbacks. Said purpose is achieved by means of a system in which the lifting tips of the stack of sheets are mounted on a frame that is movable vertically relative to the elevator and arranged thereon in an intermediate position between the needle unloader and the tray handling device, in a rest position in which the tips are below the tray, means of displacement being provided in the system to lift said movable frame relative to the elevator from said rest position to an operating position in which the tips protrude above the tray support surface when the elevator at the end of its descent reaches the level for loading/unloading with the forklift. Other advantageous features of this system are specified in the dependent claims.

The main advantage of the system according to the present invention is to prevent the tips from crossing the needle bed of the unloader, which can then be complete and sized with a spacing appropriate to the size of the workpieces cut from the sheet. In this way, there is no risk of workpieces falling off when the machined sheet is picked up by the needle unloader, nor of damage to the needle unloader and/or the tips due to possible mutual interference.

A second advantage of the present system lies in the total freedom of design of the unloader, which may not even be a traditional needle unloader, since it does not have to be crossed by the tips and could also be made in other ways (e.g., a perforated plate, a conveyor belt, etc.). In the following, specific reference will be made to a traditional needle unloader, but it is clear that, for all that has just been said, this is not a limitation.

An additional advantage of this system is that it allows the forklift to approach for loading a sheet directly into the loading station, since the ground footprint area of the elevator is free of encumbrances.

### Brief description of the figures

These and other advantages and features of the system according to the present invention will be apparent to those skilled in the art from the following detailed description of an embodiment thereof with reference to the attached drawings in which:
Fig. 1 is a front perspective view of the elevator at an intermediate level in its descending stroke, with the tips in the rest position;
Fig.2 is a view similar to Fig.1 of the elevator at a level near the end of its descent, but with the tips still in the rest position;
Fig.3 is a view similar to Fig.2 of the elevator at a level even closer to the end of the descent, but with the tips beginning to rise to engage the sheet stack; and
Fig.4 is a view similar to Fig.3 of the elevator at the end of the descent, with the tips having lifted the sheet stack off the tray.

### Detailed description

Referring to these figures, it can be seen that an automatic system according to the invention traditionally comprises an elevator consisting essentially of a pair of sidewalls 1, provided with coupling means to slide vertically along a pair of columns 2, carrying below a needle unloader 3 and above a handling device 4 interacting with the side supports 5 of a tray comprising a plurality of transverse bars 6 on which rests a stack 7 of sheets (the figures show only one end of the tray and of the handling device which are obviously symmetrical at the other end).

Note that the elevator could also be arranged cantilevered by sliding along the front uprights of the tower frame, in which case there would be no columns 2 and the coupling means on the sidewalls 1 would not be in a central position but in a rear position.

The innovative aspect of the present system, as mentioned earlier, lies in the addition to the elevator of a frame that is movable vertically relative thereto. More specifically, in the embodiment illustrated in the figures said frame comprises two crossbars 8, arranged perpendicularly to sidewalls 1, between which extend supports on which are mounted the vertical tips 9 for lifting the stack 7 of sheets.

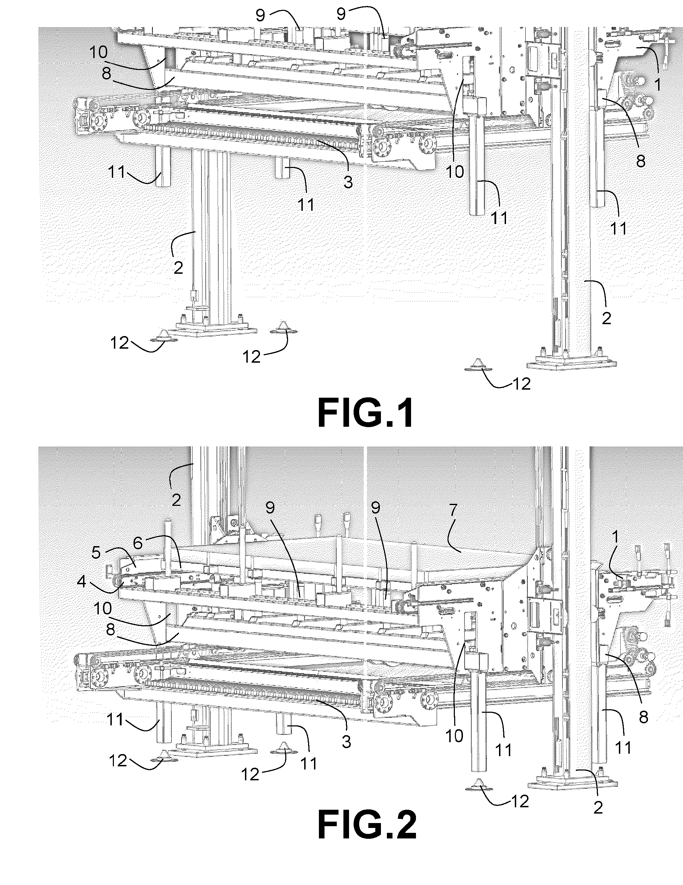

Relative movement between crossbars 8 and sidewalls 1 is made possible by vertical slots 10 cut into sidewalls 1 through which the ends of crossbars 8 project (only the two slots 10 of the front crossbar 8 being visible in the figures). By appropriately combining the height and position of tips 9 and slots 10, it is obtained that the movable frame is in the rest position when crossbars 8 rest by gravity on the lower ends of slots 10, that is, tips 9 are below the tray as shown in Figures 1 and 2.

In the embodiment shown in the figures, vertical legs 11 arranged at the ends of crossbars 8, externally to sidewalls 1, are the means of displacement to lift the movable frame relative to the elevator from said rest position to the operating position where tips 9 protrude from the support plane defined by bars 6, when the elevator reaches the end of its descent.

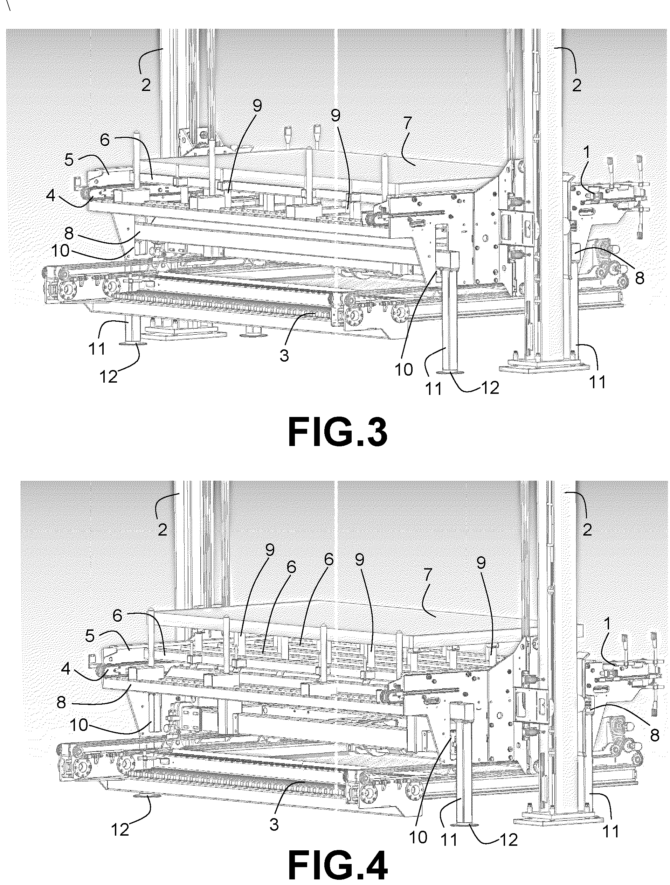

As shown in Figures 3 and 4, since legs 11 extend inferiorly below unloader 3, in the final stage of the descent of the elevator they come into contact with the ground, preferably on centering cones 12 fixed to the ground, while the elevator is still descending with the result that the movable frame remains stationary at the level defined by legs 11 while sidewalls 1 descend. This results in a relative upward displacement of crossbars 8 along slots 10 (Fig.3), and therefore in the insertion of tips 9 through bars 6 until they engage the stack 7 of sheets.

At the end of the descent of the elevator, as shown in Fig.4, crossbars 8 are near the top end of slots 10 and tips 9 protrude through bars 6 holding the stack 7 of sheets in a raised position so that the forks of the forklift can be inserted easily to remove stack 7 without touching the tray (of course, the same is true when stack 7 is loaded onto the tray). Similarly, when the elevator begins its upward stroke sidewalls 1 go up while the movable frame remains stationary, whereby tips 9 move back under the tray until the lower ends of slots 10 make contact with crossbars 8 and take them therewith (reverse sequence of Figures 4 to 1).

Note that the lengths of tips 9 and legs 11 determine the level at which the stack 7 of sheets will be located for loading/unloading with the forklift, and that the height of slots 10 must be such that their upper ends do not come into contact with crossbars 8 at the end of the descent of the elevator.

It is clear that the above-described and illustrated embodiment of the system according to the invention is just an example susceptible of various modifications. In particular, the means of displacement to lift the movable frame relative to the elevator may be varied according to specific constructional requirements as long as the general structure described above is maintained.

For example, legs 11 could be fixed to the ground and come into contact with the ends of crossbars 8, preferably equipped below with the centering cones 12. In this way, the movable frame would be lighter making it easier to move the elevator, and the encumbrance of legs 11, however, would not preclude forklift access for loading a sheet directly into the loading station, since the legs would be external to the ground footprint area of the elevator.

Another alternative embodiment could dispense with legs 11 and provide for a pair of straight or U-shaped horizontal rods, depending on how far crossbars 8 protrude from sidewalls 1, attached to columns 2 at a level such to intercept the ends of crossbars 8 so as to perform the same function as legs 11.

In another possible variant, pegs can protrude internally from columns 2 by inserting into central slots of sidewalls 1 until they intercept the movable frame. In yet another variant, legs 11 could be arranged on crossbars 8 in a position inside sidewalls 1 (in which case they would have to pass through the needle unloader 3).

Note that the above solutions simply take advantage of gravity and the displacement of the elevator to achieve the relative displacement of the movable frame, so as to simplify the elevator structure, but it would also be possible to provide motorized means of displacement arranged between sidewalls 1 and the movable frame.

Similarly, the coupling between the movable frame and sidewalls 1 of the elevator could be achieved by solutions other than slots 10 as long as they are technically equivalent, e.g., guides machined on the inner faces of sidewalls 1.

## Claims

1. An automatic system for storing and handling groups of articles to be processed, comprising a plurality of trays carrying said articles and provided with parallel and spaced apart bars (6) defining a support surface, a tower frame provided with uprights and horizontal supports suitable for defining a plurality of vertically-stacked storage stations for storing said trays, and an elevator moving vertically between said storage stations and an operational level wherein is located a station for loading/unloading the groups of articles to be processed and already processed, said elevator being equipped above with a device (4) for handling the trays and below with an unloader, preferably a needle unloader (3), for handling the processed articles, **characterized in that** the elevator is provided with a frame movable vertically relative thereto and arranged in an intermediate position between said unloader and said device (4) for handling the trays, said movable frame carrying a plurality of vertical tips (9) sized to fit between said bars (6) of the trays moving vertically between a rest position in which said tips (9) are below the bars (6) and an operating position in which the tips (9) protrude superiorly to the bars (6), **and in that** the system includes means of displacement for the relative lifting of the movable frame with respect to the elevator from said rest position to said operating position when the elevator at the end of its descent reaches said operational level of the loading/unloading station.

2. An automatic system according to claim 1, **characterized in that** the elevator comprises two sidewalls (1) carrying the unloader, the device (4) for handling the trays and the movable frame, said movable frame comprising two crossbars (8) arranged perpendicularly to said sidewalls (1).

3. An automatic system according to claim 2, **characterized in that** the crossbars (8) are inserted into vertical slots (10) formed in the sidewalls (1) through which the ends of said crossbars (8) protrude.

4. An automatic system according to claim 2 or 3, **characterized in that** the movable frame is provided with vertical legs (11) extending inferiorly below the unloader.

5. An automatic system according to claims 3 and 4, **characterized in that** the vertical legs (11) are arranged at the ends of the crossbars (8), external to the sidewalls (1).

6. An automatic system according to claim 4 or 5, **characterized in that** it further comprises centering cones (12) that are fixed to the ground at the abutment points of the legs (11).

7. An automatic system according to any of claims 1 to 3, **characterized in that** the displacement means for the relative lifting of the movable frame with respect to the elevator comprise fixed elements arranged to make contact with the movable frame before the elevator reaches the end of its descent.

8. An automatic system according to claim 7, **characterized in that** the fixed elements are constrained to the ground or to the structure on which the elevator vertically slides.

9. An automatic system according to any of the preceding claims, **characterized in that** the elevator is centrally mounted on two columns (2).

## Patentansprüche

1. Automatisches System zum Lagern und Handhaben von Gruppen von Artikeln, die zu verarbeiten sind, umfassend eine Vielzahl von Tabletts, die die Artikel tragen und mit parallelen und beabstandeten Stäben (6) versehen sind, die eine Stützoberfläche definieren, einen Turmrahmen, der mit Pfosten und horizontalen Stützen versehen ist, die zum Definieren einer Vielzahl von vertikal gestapelten Lagerstationen zum Lagern der Tabletts geeignet sind, und einen Aufzug, der sich vertikal zwischen den Lagerstationen und einer Betriebsebene bewegt, in dem sich eine Station zum Beladen/Entladen der Gruppen von Artikeln, die zu verarbeiten sind und bereits verarbeitet sind, befindet, wobei der Aufzug oben mit einer Vorrichtung (4) zum Handhaben der Tabletts und unten mit einem Entlader, vorzugsweise einem Nadelentlader (3), zum Handhaben der verarbeiteten Artikel ausgestattet ist, **dadurch gekennzeichnet, dass** der Aufzug mit einem Rahmen versehen ist, der relativ dazu vertikal beweglich und in einer Zwischenposition zwischen dem Entlader und der Vorrichtung (4) zum Handhaben der Tabletts angeordnet ist, wobei der bewegliche Rahmen eine Vielzahl von vertikalen Spitzen (9) trägt, die bemessen sind, um zwischen die Stäbe (6) der Tabletts zu passen, die sich zwischen einer Ruheposition, in der die Spitzen (9) unterhalb der Stäbe (6) sind, und einer Betriebsposition, in der die Spitzen (9) oberhalb der Stäbe (6) vorstehen, vertikal bewegen **und dass** das System Verschiebungsmittel zum relativen Anheben des beweglichen Rahmens hinsichtlich des Aufzugs von der Ruheposition zu der Betriebsposition einschließt, wenn der Aufzug an dem Ende seines Absenkens die Betriebsebene der Beladungs-/Entladungsstation erreicht.

2. Automatisches System nach Anspruch 1,
**dadurch gekennzeichnet, dass** der Aufzug zwei Seitenwände (1) umfasst, die den Entlader, die Vorrichtung (4) zum Handhaben der Tabletts und den beweglichen Rahmen tragen, der bewegliche Rahmen umfassend zwei Querbalken (8), die senkrecht zu den Seitenwänden (1) angeordnet sind.

3. Automatisches System nach Anspruch 2, **dadurch gekennzeichnet, dass** die Querbalken (8) in vertikale Schlitze (10) eingesetzt sind, die in den Seitenwänden (1) ausgebildet sind, durch die die Enden der Querbalken (8) vorstehen.

4. Automatisches System nach Anspruch 2 oder 3,
**dadurch gekennzeichnet, dass** der bewegliche Rahmen mit vertikalen Beinen (11) versehen ist, die sich unterhalb des Entladers nach unten erstrecken.

5. Automatisches System nach den Ansprüchen 3 und 4,
**dadurch gekennzeichnet, dass** die vertikalen Beine (11) an den Enden der Querbalken (8) außerhalb der Seitenwände (1) angeordnet sind.

6. Automatisches System nach Anspruch 4 oder 5,
**dadurch gekennzeichnet, dass** es ferner Zentrierkegel (12) umfasst, die an den Anlagepunkten der Beine (11) an dem Boden befestigt sind.

7. Automatisches System nach einem der Ansprüche 1 bis 3,
**dadurch gekennzeichnet, dass** die Verschiebungsmittel für das relative Anheben des beweglichen Rahmens hinsichtlich des Aufzugs feste Elemente umfassen, die angeordnet sind, um mit dem beweglichen Rahmen in Berührung zu kommen, bevor der Aufzug das Ende seines Absenkens erreicht.

8. Automatisches System nach Anspruch 7,
**dadurch gekennzeichnet, dass** die festen Elemente an den Boden oder an die Struktur gebunden sind, auf der der Aufzug vertikal gleitet.

9. Automatisches System nach einem der vorstehenden Ansprüche,
**dadurch gekennzeichnet, dass** der Aufzug an zwei Säulen (2) zentral montiert ist.

## Revendications

1. Système automatique de stockage et de manutention de groupes d'articles à traiter, comprenant une pluralité de plateaux portant lesdits articles et pourvus de barres parallèles et espacées (6) définissant une surface de support, un châssis en tour pourvu de montants et de supports horizontaux appropriés pour définir une pluralité de postes de stockage empilés verticalement pour stocker lesdits plateaux, et un élévateur se déplaçant verticalement entre lesdits postes de stockage et un niveau opérationnel dans lequel est situé un poste de chargement/déchargement des groupes d'articles à traiter et déjà traités, ledit élévateur étant équipé en haut d'un dispositif (4) de manipulation des plateaux et en bas d'un déchargeur, de préférence un déchargeur à aiguilles (3), pour manipuler les articles traités, **caractérisé en ce que** l'élévateur est pourvu d'un cadre mobile verticalement par rapport à celui-ci et agencé dans un une position intermédiaire entre ledit déchargeur et ledit dispositif (4) de manutention des plateaux, ledit cadre mobile portant une pluralité de pointes verticales (9) dimensionnées pour s'insérer entre lesdites barres (6) des plateaux se déplaçant verticalement entre une position de repos dans laquelle lesdites pointes (9) sont au-dessous des barres (6) et une position de fonctionnement dans laquelle les pointes (9) font saillie au-dessus des barres (6), **et en ce que** le système comporte des moyens de déplacement pour le levage relatif du cadre mobile par rapport à l'élévateur de ladite position de repos à ladite position de fonctionnement lorsque l'élévateur, à la fin de sa descente, atteint ledit niveau opérationnel du poste de chargement/déchargement.

2. Système automatique selon la revendication 1, **caractérisé en ce que** l'élévateur comprend deux parois latérales (1) portant le déchargeur, le dispositif (4) de manutention des plateaux et le cadre mobile, ledit cadre mobile comprenant deux traverses (8) agencées perpendiculairement auxdites parois latérales (1).

3. Système automatique selon la revendication 2, **caractérisé en ce que** les traverses (8) sont insérées dans des fentes verticales (10) formées dans les parois latérales (1) à travers lesquelles les extrémités desdites traverses (8) font saillie.

4. Système automatique selon la revendication 2 ou 3,
**caractérisé en ce que** le cadre mobile est pourvu de pieds verticaux (11) s'étendant vers le bas au-dessous du déchargeur.

5. Système automatique selon les revendications 3 et 4,
**caractérisé en ce que** les pieds verticaux (11) sont disposés au niveau des extrémités des traverses (8), à l'extérieur des parois latérales (1).

6. Système automatique selon la revendication 4 ou 5, **caractérisé en ce qu'**il comprend en outre des cônes de centrage (12) qui sont fixés au sol au niveau des points de butée des pieds (11).

7. Système automatique selon l'une quelconque des revendications 1 à 3, **caractérisé en ce que** les moyens de déplacement pour le levage relatif du cadre mobile par rapport à l'élévateur comprennent des éléments fixes agencés pour entrer en contact avec le cadre mobile avant que l'élévateur n'atteigne la fin de sa descente.

8. Système automatique selon la revendication 7, **caractérisé en ce que** les éléments fixes sont contraints au sol ou à la structure sur laquelle l'élévateur coulisse verticalement.

9. Système automatique selon l'une quelconque des revendications précédentes, **caractérisé en ce que** l'élévateur est monté de manière centrale sur deux colonnes (2).
